# EUROPEAN PATENT APPLICATION

(11) **EP 4 804 429 A1**
(43) Date of publication of application: **09.09.2026**
(21) Application number: 25382197.9
(22) Date of filing: 05.03.2025
(51) Int. Cl.: H04B 10/61, H04B 10/64

(54) **POLARIZATION-DIVERSITY COHERENT RECEIVERS**

(71) Applicant: LuxQuanta Technologies S.L., 08860 Castelldefels (ES)
(72) Inventor: Tabares, Jeison, 08860 Castelldefels, Barcelona (ES); Gomez Kabelka, Pau, 08860 Castelldefels, Barcelona (ES); Etcheverry Cabrera, Sebastian, 08860 Castelldefels, Barcelona (ES)
(74) Representative: Grünecker Patent- und Rechtsanwälte PartG mbB

(57) **Abstract**

A coherent receiver, RX, comprising: an optical front-end configured to receive a modulated optical signal S, the optical front-end comprising: at least two photodetectors; a local oscillator, *L0*, configured to generate a local oscillator, *LO*, light beam; a first optical component configured to split: the received signal into two orthogonal polarization components, ${S}_{X}$ and ${S}_{Y}$ , or the local oscillator light beam into two orthogonal polarization components, ${LO}_{X}$ and ${LO}_{Y}$; a second optical component being a 3x3 optical coupler configured to mix: the modulated optical signal S with ${LO}_{X}$ and ${LO}_{Y}$ ,or the *L0* light beam with ${S}_{X}$ and ${S}_{Y}$, thereby providing a mixed signal, and to output the mixed signal to the at least two photodetectors; the least two photodetectors configured to detect the mixed signal and to output a detected signal; at least two analog to digital converters, ADCs configured to digitize the detected signal received from the at least two photodetectors, thereby providing at least two digitized signals; a signal processing unit configured to receive the digitized signals from the ADCs, wherein the signal processing unit is configured to recover state of polarization, SOP, contributions of the received signal by either using a pair of Hilbert transforms or else by using a pair of radio frequency, RF, mixers followed by low pass filters, LPF.

## Description

### Field of Invention

The present invention relates to a novel scheme for implementing a polarization-diversity coherent receiver with lower complexity at the optical front-end and aided by digital signal processing to recover the orthogonal polarization components of the received signal.

### Background of the invention

In optical communication systems, the transmitter (TX) encodes information in physical parameters of a lightwave, acting as a high-frequency carrier that propagates through the transmission medium (optical fiber or free space). These physical parameters such as field intensity, instantaneous phase, or state-of-polarization (SOP), can be fully detected at the receiver (RX) side by using coherent detection which mixes the received light with another lightwave generated locally - namely, the local oscillator (*LO*) - before photodetection. This optical interferometry between signal and *LO* allows the RX to linearly map the mentioned physical parameters of the received lightwave into the electrical domain, in contrast with direct-detection (DD) using a single photodetector that responses only to changes in the optical field intensity. The optical mixing with the *LO* also amplifies the received signal and makes the coherent RX wavelength-selective by tuning the *LO* wavelength.

The detection process in coherent RXs relies on the signal-*LO* beating that occurs within the photodiodes. The full beating is only possible if photons from the signal and *LO* reach the photodiode with the same SOP; otherwise, the coherent beating suffers from power loss depending on the SOP misalignment. For instance, when signal and *LO* have orthogonal SOP there is no coherent beating in the photodiode, as the worst case. This holds for any type of coherent detection: homodyne, intradyne or heterodyne, differing in the optical phase mismatch between signal and *LO.* Homodyne detection applies to receivers in which signal and *LO* are matched in optical frequency and phase by implementing a phase-locked-loop (PLL) mechanism. Intradyne detection implements free-running *LO,* and the PLL is replaced by phase-diversity (*I*, *Q*) detection, i.e. the phase (*I*) and quadrature (*Q*) components of the signal are detected / measured. The frequency difference between signal and *LO* is set lower than the modulation bandwidth (BW). Last, in heterodyne detection the frequency difference between signal and *LO* is larger than the modulation BW, thus phase-diversity detection is not required as the photodetected signal consists of a radio frequency (RF) carrier that fully preserves information encoded in the intensity and phase of the received optical signal.

The need for SOP matching in coherent detection imposes a serious challenge when the optical signals travel through the optical devices and fibers composing an optical network, because the signal SOP evolves unpredictably due to the birefringence of the materials for optics. This makes polarization tracking systems mandatory at the coherent RX to compensate for SOP misalignment before signal- *LO* beating at the photodetectors. A typical solution consists of automatic polarization controller placed in the signal path at the RX input, before mixing with the *LO.* The polarization controller is driven by the digital signal processing (DSP) unit of the coherent RX to dynamically adjust the signal SOP aligning it to the *LO* SOP. This keeps the complexity of the coherent RX front-end low, as it only requires an extra polarization controller at the RX input and an electronic feedback loop for the driving. However, the main drawbacks are the limited capacity for fast tracking of SOP changes due to the delay from the control loop, and therefore, the inability to detect fast polarization-modulated information.

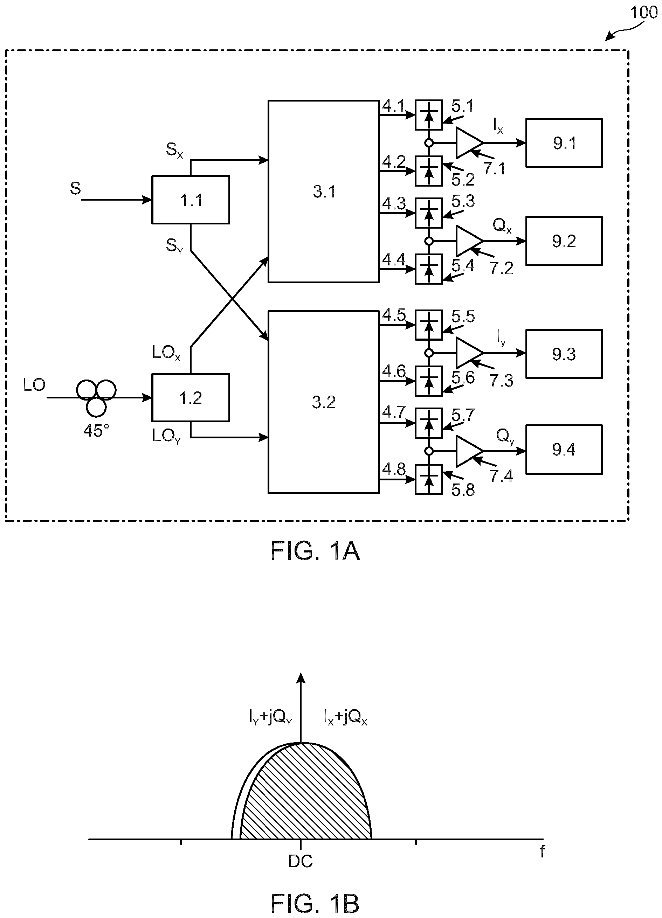

Another strategy, widely adopted, to deal with SOP changes is polarization diversity at the RX. It consists of splitting the received signal S into two orthogonal polarization components, ${S}_{X}$ and ${S}_{Y}$, by means of a polarization beam splitter (PBS), and processing them separately with two independent coherent RXs (one for each signal SOP), allowing for full recovery of the SOP information by the DSP. FIG. 1A shows a typical implementation of a polarization-diversity intradyne receiver with optical 90° hybrids. The receiver outputs are four photocurrents corresponding to the *I* and *Q* signals for each SOP ( 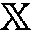 , 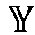 ), whose frequency domain representation is depicted in FIG. 1B. The main limitations of this RX architecture are:

The complexity of the optical front-end, that requires two optical 90° hybrids, eight photodiodes connected in pairs for balanced photodetection, and four analog-to-digital converters (ADCs)

The insertion loss (IL) of the 90° hybrid, of 6 dB (intrinsic) that lowers the signal-to-noise ratio (SNR) at the photodetection.

To simplify the complexity of this RX architecture, the two 90° hybrids with 8 photodiodes can be replaced by two symmetric 3x3 couplers with 6 photodiodes, as reported in [Don14]. However, it requires two extra ADCs, i.e. 6 in total, and the need for two independent RXs to detect each signal SOP still persists.

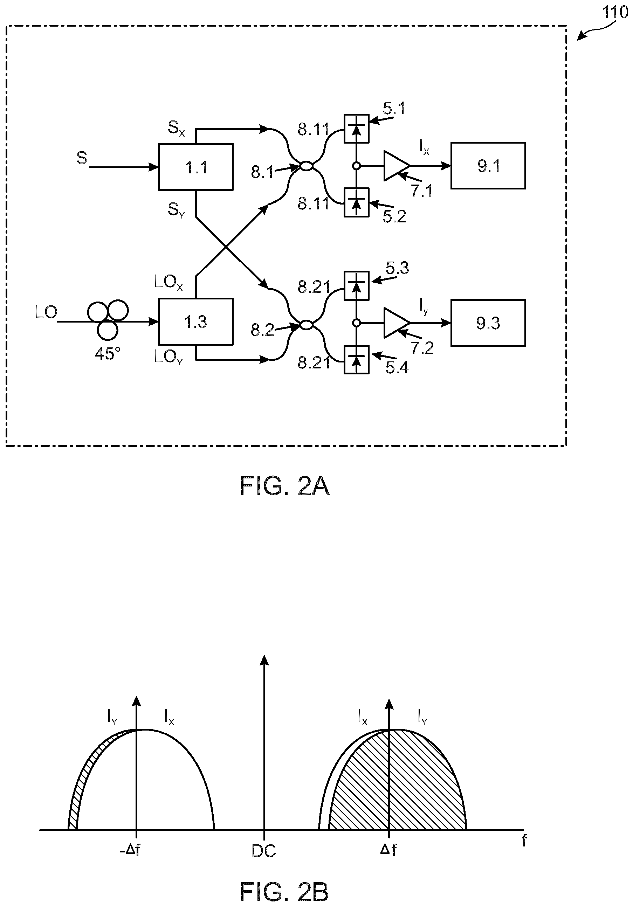

An alternative realization of the polarization-diversity coherent RX, with lower-complexity, is the heterodyne RX illustrated in FIG. 2A, in which the two optical 90° hybrids are replaced by two symmetric 2x2 couplers, and it requires two balanced photodetectors, i.e. four photodiodes and two ADCs only. Despite a simplification in the optical front-end, the drawbacks of this implementation are:

The heterodyne detection translates the complexity to the electrical domain, as it needs much higher electrical BW in photodetectors and ADCs than the intradyne detection, e.g. typically two- or three-times higher BW.

The SNR at the detection does not improve compared with the intradyne RX in FIG. 1A because the IL of the 2x2 coupler is now 3 dB instead of 6 dB from the 90° hybrid (3 dB less power loss), but the heterodyne detection doubles the detection noise BW (3 dB extra noise power) due to the double-sided signal spectrum, as can be seen in FIG. 2B. Thus, from SNR's perspective both coherent RXs in FIG. 1A and FIG. 2A perform the same.

To further simplify complexity, several variants of the two coherent RX architectures presented in FIGs. 1 and 2 have been reported in recent literature. For example, [Erk18] proposes polarization-switching in time at the transmitter that enables single-polarization intradyne detection at the RX, without the need of polarization controller at the RX input. This solution, however, requires polarization modulation at the TX, thus increasing its complexity, and needs extra BW at the RX for the time-switching operation, comparable to heterodyne detection. Alternatively, it is also proposed in [Erk18] and [Kov23] the use of single-ended detection for the polarization-diversity heterodyne RX to save one 2x2 coupler and two photodiodes. This reduction in complexity comes at the expense of extra noise from the direct detection, including wideband spontaneous-spontaneous beat noise, which might become critical in noise-sensitive applications like Quantum key distribution (QKD), or in dense wavelength division multiplexing (WDM) scenarios with high number of aggregated users, wherein the combined power of all users falls within the direct-detection. Additionally, the intrinsic 3dB SNR penalty of the heterodyne detection remains.

In view of the above, it is an object of the present invention to alleviate the above-mentioned problems by

### Summary

The present invention addresses the above-mentioned problems by providing:

A first aspect of a polarization-diversity coherent receiver, RX, comprising: an optical front-end configured to receive a modulated optical signal *S*, the optical front-end comprising: at least two photodetectors; a local oscillator, *LO,* configured to generate a local oscillator, *LO*, light beam; a first optical component configured to split: the received signal into two orthogonal polarization components, ${S}_{X}$ and ${S}_{Y}$, or the local oscillator light beam into two orthogonal polarization components, ${LO}_{X}$ and ${LO}_{Y}$; a second optical component being a 3x3 optical coupler configured to mix: the modulated optical signal *S* with ${LO}_{X}$ and ${LO}_{Y}$, or the *LO* light beam with ${S}_{X}$ and ${S}_{Y}$, thereby providing a mixed signal, and to output the mixed signal to the at least two photodetectors; the least two photodetectors configured to detect the mixed signal and to output a detected signal; at least two analog to digital converters, ADCs, configured to digitize the detected signal received from the at least two photodetectors, thereby providing at least two digitized signals; a digital signal processing, DSP, unit configured to receive the digitized signals from the ADCs, wherein the signal processing unit is configured to recover state of polarization, SOP, contributions of the received signal by either using a pair of Hilbert transforms or else by using a pair of radio frequency, RF, mixers followed by low-pass filters, LPF.

This addresses the limitations associated with conventional polarization-diversity coherent RXs by providing a design that eliminates the need for duplicating the RX front-end, while simultaneously improving the performance in terms of SNR of the detection.

It further provides for the possibility of separating the two orthogonal SOP components of the received signal to be processed separately, namely polarization diversity.

The polarization diversity coherent receiver according to the first aspect as described above may further comprise: the first optical component being configured to split local oscillator light beam into two orthogonal polarization components, ${LO}_{X}$ and ${LO}_{Y}$, comprises the first optical component being configured to obtain one of the two orthogonal polarization components, ${LO}_{X}$ and ${LO}_{Y}$, by adding 90° polarization rotation to the respective other one of the two orthogonal polarization components.

The polarization diversity coherent receiver according to the first aspect as described above may further comprise: the first optical component being a polarization beam splitter, PBS, being configured to output two orthogonal polarization components.

The polarization diversity coherent receiver according to the first aspect as described above may further comprise: the PBS being further configured to add a 90° polarization rotation to one of the two orthogonal polarization components.

The polarization diversity coherent receiver according to the first aspect as described above may further comprise: detection by the at least two photodetectors being heterodyne.

The polarization diversity coherent receiver according to the first aspect as described above may further comprise: the signal processing unit being or comprising one of a Field Programmable Gate Array, FPGA, and an application-specific integrated circuit, ASIC.

The polarization diversity coherent receiver according to the first aspect as described above may further comprise: the photodiodes being single-ended.

The polarization diversity coherent receiver according to the first aspect as described above may further comprise: the signal processing unit being configured to recover state of polarization, SOP, further comprising linearly combining the output signals of the ADCs in order to recover quadrature components of the detected signal, as well as to cancel direct-detection terms and common-mode noise.

The present invention further provides:
A second aspect of a method of recovering orthogonal polarization components of a received transmission signal, the signal received by a polarization-diversity coherent receiver, RX, according to the first aspect, the method comprising: receiving a modulated optical signal *S* by an optical front-end; generating, by a local oscillator, *LO*, a polarized local oscillator light beam; splitting, by a first optical component, the received signal into two orthogonal polarization components, ${S}_{X}$ and ${S}_{Y}$, or the local oscillator light beam into two orthogonal polarization components, ${LO}_{X}$ and ${LO}_{Y}$; mixing, by a second optical component being a 3x3 optical coupler, the modulated optical signal S with ${LO}_{X}$ and ${LO}_{Y}$, or the *LO* light beam with ${S}_{X}$ and ${S}_{Y}$, thereby providing a mixed signal; outputting the mixed signal to at least two photodiodes, detecting the mixed signal by the at least two photodiodes, and outputting a detected signal; digitizing the detected signal received from the at least two photodetectors, thereby providing at least two digitized signals; recovering state of polarization, SOP, contributions of the received signal by either using a pair of Hilbert transforms or else by using a pair of radio frequency, RF, mixers and low-pass filters, LPF.

The method according to the second aspect as described above may further comprise: splitting, by the first optical component, the local oscillator light beam into two orthogonal polarization components, ${LO}_{X}$ and ${LO}_{Y}$, comprising obtaining one of the two orthogonal polarization components, ${LO}_{X}$ and ${LO}_{Y}$, by adding a 90° polarization rotation to the respective other one of the two orthogonal polarization components.

The method according to the second aspect as described above may further comprise: the first optical component being a polarization beam splitter, PBS, being configured to output two orthogonal polarization components.

The method according to the second aspect as described above may further comprise: the PBS being further configured to add a 90° polarization rotation to one of the two orthogonal polarization components.

The method according to the second aspect as described above may further comprise: detection by the at least two photodetectors being heterodyne.

### Brief description of the drawings

- FIG. 1A:: illustrates an example of a polarization-diversity intradyne receiver with optical 90° hybrid
- FIG. 1B:: illustrates a corresponding electrical spectrum in the frequency domain corresponding to FIG 1A
- FIG. 2A:: illustrates an example of a polarization-diversity heterodyne receiver with optical 2x2 couplers
- FIG 2B: illustrates a corresponding electrical spectrum in the frequency domain corresponding to FIG 2A
- FIG. 3A:: illustrates a polarization-diversity coherent receiver according to an embodiment of the present invention
- FIG. 3B: illustrates a corresponding electrical spectrum in the frequency domain corresponding to FIG. 3A
- FIG. 4: illustrates a polarization-diversity coherent receiver according to another embodiment of the present invention
- FIG. 5: illustrates a polarization-diversity coherent receiver according to yet another embodiment of the present invention
- FIG. 6: illustrates a polarization-diversity coherent receiver according to yet another embodiment of the present invention
- FIG. 7: illustrates a polarization-diversity coherent receiver according to yet another embodiment of the present invention

### Description

In comparison to the examples shown in FIGs 1A, 1B, 2A and 2B, the present invention discloses a new scheme to implement a polarization-diversity coherent receiver.

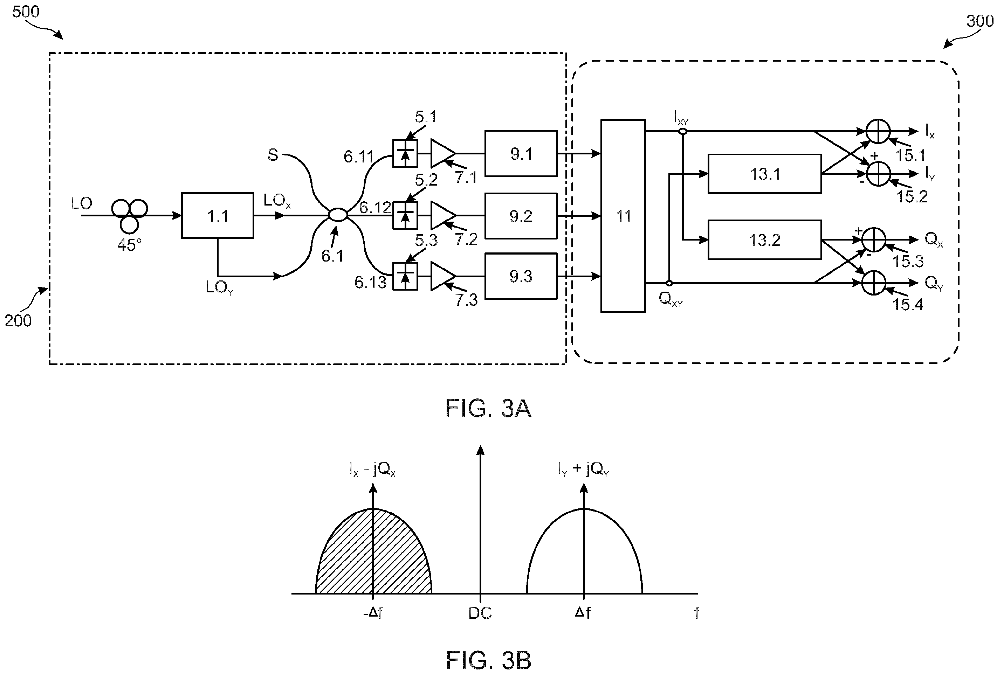

FIG. 3A illustrates a polarization-diversity coherent receiver 500 according to an embodiment of the present disclosure. The polarization-diversity coherent receiver 500 of FIG. 3A comprises an optical front end 200 and a signal processing unit 300. The signal processing unit may also be referred to as a software-defined polarization diversity module 300.

The optical front end 200 of FIG. 3A includes a local oscillator *LO.* The *LO* is configured to generate a field that is be polarized at a specific angle. For example, this polarization is 45°, which is indicated in FIG. 3A. However, other polarizations are also possible. The purpose of polarizing at 45° the *LO* is for optimizing the coherent detection, because the received signal mixes with two polarization components of the *LO* that have the same power, thus maximizing the signal-to-noise ratio of the detection. Other polarization angles of the *LO* also work, but in that case, the coherent detection might be less optimal.

The optical front end 200 further includes a first optical component 1.1. This first optical component might be a polarization beam splitter, PBS. In FIG. 3A, the first optical component 1.1 is configured to split the local oscillator light beam into two orthogonal polarization components, ${LO}_{X}$ and ${LO}_{Y}$*.* FIG. 3A further illustrates that the optical front end 200 includes a second optical component 6.1 being a 3x3 optical coupler. The 3x3 optical coupler 6.1 is configured to receive the two orthogonal polarization components, ${LO}_{X}$ and ${LO}_{Y}$ and a modulated optical signal S. The 3x3 optical coupler then is configured to mix the three input signals into three output signals. Typically, the 3x3 optical coupler 6.1 is a symmetric optical coupler. Thus, the symmetric optical coupler 6.1 provides three output signals 6.11, 6.12, and 6.13 of the three mixed input signals. The output signals 6.11, 6.12, and 6.13 are equal in power, whereas each of the three signals is shifted by approximately 2π/3, i.e. approximately 120°, with respect to the respective other two signals. As indicated in FIG. 3A, the three output signals 6.11, 6.12, and 6.13 are then detected by three photodetectors 5.1, 5.2, and 5.3. The three photodetectors 5.1, 5.2 and 5.3 may be equal.

The three photodetectors 5.1, 5.2 and 5.3 are configured to detect the impinging optical signal and are configured to output electrical signals, respectively. The output signals of the photodetectors may be amplified by amplifiers 7.1, 7.2, and 7.3, respectively. However, depending on signal size these amplifiers may be omitted. Finally, the output signals are digitized by means of analog to digital converters, ADCs, 9.1, 9.2, and 9.3.

It should be understood that the ADCs may be part of the optical front end 200 or may be provided separately. This also holds for all further embodiments of the present disclosure.

The signal processing unit 300 of FIG. 3A may be implemented via a DSP. The signal processing unit 300 of FIG. 3A receives the digital output signals from ADCs 9.1, 9.2 and 9.3. These signals have a respective relative phase shift of approximately 120° between them. The signals are received by means of a recovery module 11 for recovery of the I and Q components of the detected signals, which are received in digital form. The module 11 may also be referred to as an IQ recovery module. The output of the IQ recovery module are the quadrature components ${I}_{XY}$ and ${Q}_{XY}$.

To understand how the quadrature components are determined, the following should be considered.

The embodiment illustrated in FIG. 3A uses a symmetric 3x3 coupler 6.1 to mix the received optical signal S with the 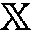 and 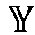 SOP components of the *LO* beam, previously separated by the PBS 1.1.

For optimality of the coherent mixing, the *LO* is polarized at 45° so that the orthogonal decomposition, i.e ${LO}_{X} , {LO}_{Y}$, has the same power in both components.

The three outputs of the 3x3 coupler 6.1 are detected by single-ended photodiodes 5.1, 5.2, and 5.3 and subsequently digitized by three ADCs 9.1, 9.2, and 9.3 for the subsequent DSP in the signal processing unit 300.

In this embodiment, the detection is heterodyne, in which the frequency detuning Δ*f* between S and *LO* is typically larger than the modulation BW.

Typically, heterodyne detection may be set up as follows:
1. Determining the modulation bandwidth of *S* (by measurement, or theoretical calculation)
2. Tuning of the optical frequency of the *LO* laser to be shifted with respect to the frequency of the transmitter laser by at least the modulation bandwidth of *S*, as determined in step 1.
3. Assigning of the photodetectors, ADCs, and further RF electronics of the receiver to have a bandwidth that supports the total bandwidth set in step 2, i.e. *LO* shifting + bandwidth of *S*.

In the 3x3 coupler, the optical mixing between *S* and *LO* is described by the matrix: $\left[\begin{matrix}{e}_{1} \\ {e}_{2} \\ {e}_{3}\end{matrix}\right] = \frac{1}{3} \left[\begin{matrix}a & b & b \\ b & a & b \\ b & b & a\end{matrix}\right] ∗ \left[\begin{matrix}S \\ {S}_{X} \\ {LO}_{Y}\end{matrix}\right]$ with a, b the 3x3 scatter matrix coefficients given by $\begin{matrix}a = {e}^{- j \frac{4 π}{9}} + 2 {e}^{j \frac{2 π}{9}} \\ b = {e}^{- j \frac{4 π}{9}} - {e}^{j \frac{2 π}{9}}\end{matrix}$

If ideal photodetection is assumed, the three photocurrents are proportional to the incident optical power, calculated as ${i}_{k} ∝ {\left|{e}_{k , X}\right|}^{2} + {\left|{e}_{k , Y}\right|}^{2}$ with k = {1, 2, 3} the index of the three coupler outputs 6.11, 6.12, and 6.13.

Following the digital sampling by the ADCs 9.1, 9.2 and 9.3, the three electrical signals with a relative phase shift of approximately 120° among them, are linearly combined to recover the *I* and *Q* components of the coherent beating, as well as to cancel the direct-detection terms and common-mode noise.

Given that the received signal S having two orthogonal SOP components ${S}_{X} , {S}_{Y}$ mixes with ${LO}_{X} , {LO}_{Y}$, each of the resulting *I* and *Q* signals contain the 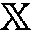 and Y contributions of the coherent beating. The transformation matrix to balance the photocurrents and recover *I* and *Q*, i.e. by the IQ recovery module 11, is: $\left[\begin{matrix}{I}_{XY} \\ {Q}_{XY}\end{matrix}\right] = \left[\begin{matrix}- 1 & 1 / 2 & 1 / 2 \\ 0 & 1 / \sqrt{3} & - 1 / \sqrt{3}\end{matrix}\right] ∗ \left[\begin{matrix}{i}_{1} \\ {i}_{2} \\ {i}_{3}\end{matrix}\right]$

The signal processing unit 300 of FIG. 3A further illustrates that the IQ recovery module 11 is configured to output the quadrature signals ${I}_{XY}$ and ${Q}_{XY}$. The signal processing unit 300 further includes a pair of 90° Hilbert transforms 13.1 and 13.2 to provide a 90° phase shift (rotation) of a copy of the ${I}_{XY}$ and ${Q}_{XY}$ signal, respectively. Using the adders and subtractors 15.1, 15.2, 15.3, 15.4, to selectively cancel the side-bands of the spectrum of ${I}_{XY} + {jQ}_{XY}$, the signals ${I}_{X} , {I}_{Y} , {Q}_{X} , {Q}_{Y}$ are extracted.

The frequency domain representation of the complex signal ${I}_{XY} + {jQ}_{XY}$ is depicted in FIG. 3B, revealing that each SOP contribution of the received complex signal, i.e. ${I}_{X} - {jQ}_{X}$ and ${I}_{Y} + {jQ}_{Y}$, is located at opposite sides of the electrical spectrum, without spectral overlap, thus facilitating their separation in the electrical domain by DSP to achieve the polarization diversity.

It should be repeated, again, that it suffices to selectively cancel the side bands of the spectrum of ${I}_{XY} + {jQ}_{XY}$, that can be realized by a pair of Hilbert transforms as illustrated in the software-defined structure in FIG. 3A.

Notably, the proposed heterodyne RX scheme does not suffer from the 3 dB SNR penalty of conventional heterodyne detection, as the cancelation of the side-bands of ${I}_{XY} + {jQ}_{XY}$ by the DSP to separate the SOP components also cancels half of the total noise BW.

Furthermore, the intrinsic insertion loss, IL, of the symmetric 3x3 coupler is 4.8 dB, giving as a result 1.2 dB improvement in SNR at the detection compared with the coherent RXs in FIGs. 1 and 2.

Thus, FIGs 3A, 3B disclose a polarization-diversity coherent receiver 500 that does not require duplicate optical hardware to detect the two orthogonal SOP of the received signal, and also enhances the SNR at the detection compared with conventional intradyne/heterodyne polarization-diversity coherent detection. The coherent RX design described for the embodiment of FIGs 3A and 3B employs a symmetric 3x3 optical coupler and three single-ended photodetectors to mix the received signal with the *LO.*

For the following embodiments, same elements as shown in FIG 3A are denoted with the same reference signs and will not be explained, again.

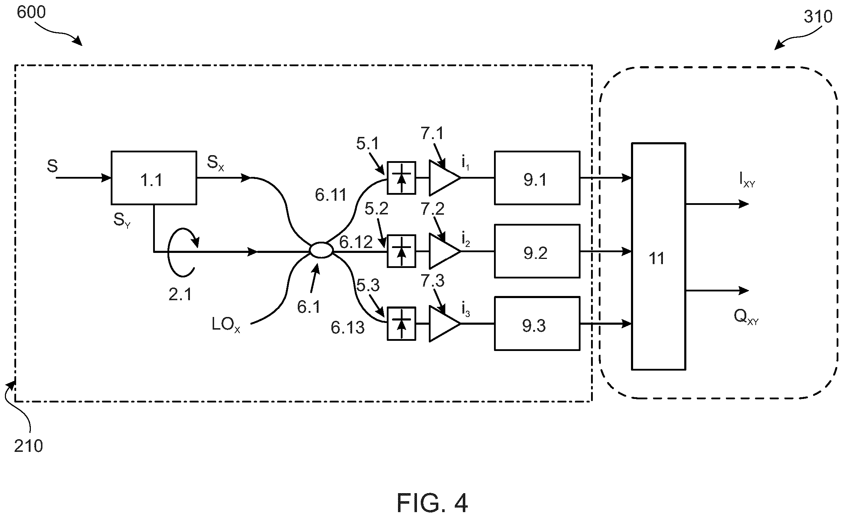

FIG. 4 illustrates an alternative embodiment of the present disclosure. FIG. 4 illustrates a polarization-diversity coherent receiver 600 according to an embodiment of the present disclosure. The polarization-diversity coherent receiver 600 of FIG. 4 comprises an optical front end 210 and a signal processing unit 310. The signal processing unit 310 is the same as signal processing unit 300 of FIG. 3A, thus only the left side of unit 310 is shown in FIG. 4. The alternative embodiment of the optical front-end 210 of FIG. 4 can have the first optical component, i.e. the PBS 1.1 attached to the signal path of the receiver front-end. This requires that the PBS 1.1 provides for adding 90° axis-rotation to one of its outputs to ensure that all the signals connect to the 3x3 coupler with the same polarization axis, as shown in FIG. 4. The 90° axis-rotation is indicated in FIG. 4 by element 2.1. It should be understood that element 2.1 may be included in the PBS or may be a separate element. This alternative has the advantage of simplifying the *LO* attachment, without the need of polarizing it at 45°, but at the cost of having some extra insertion loss from the PBS to the received signal.

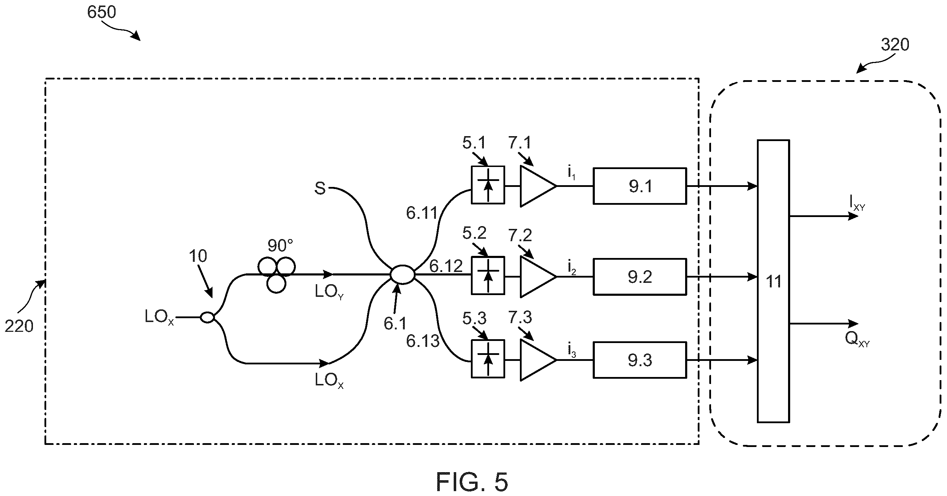

According to yet another alternative embodiment, the optical front-end shown in FIG. 3A, with the PBS attached to the *LO* path, can be also implemented without PBS by adding 90° polarization rotation to one of the 3x3 input arms. This is illustrated in FIG. 5.

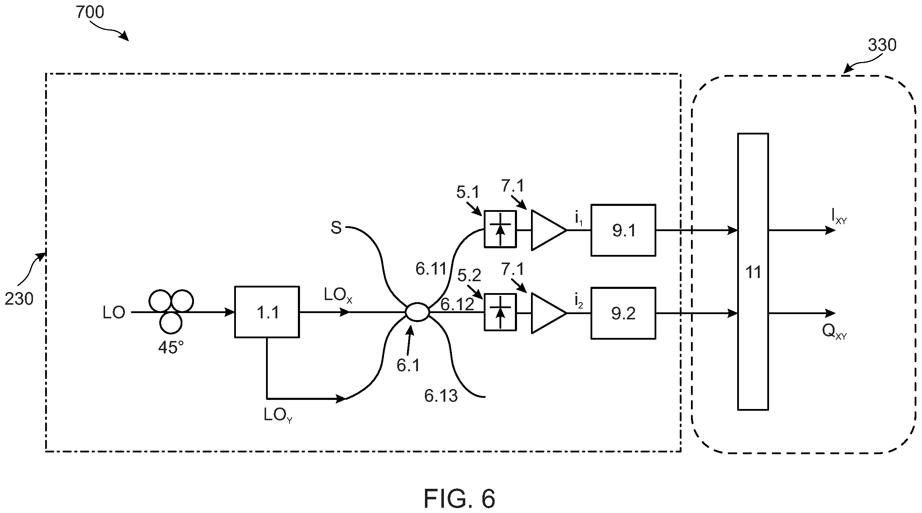

FIG. 5 an alternative embodiment of the present disclosure. FIG. 5 illustrates a polarization-diversity coherent receiver 650 according to an embodiment of the present disclosure. FIG. 5 illustrates an optical front end 220 and a signal processing unit 320. The signal processing unit 320 is the same as signal processing unit 300 of FIG. 3A, thus only the left side of unit 320 is shown in FIG. 5. The optical front-end 220 includes a 50:50 beam splitter 10 in the ${LO}_{X}$ path. One of the two signals obtained from the beam splitter 10 is then received by polarization rotator that adds 90° polarization to it. This 90° polarized beam will then be the ${LO}_{Y}$ input for the 3x3 coupler 6.1. From here, everything is similar as in FIG. 3A or likewise, FIG. 6. Thus, the same reference signs are used and need not be explained, again.

The design of embodiment of FIG. 5 can be useful for photonic integration of the coherent RX, as the 90° polarization rotation can be more accurately controlled than in discrete photonics with optical fibers.

FIG. 6 illustrates a further embodiment of the present disclosure. FIG. 6 illustrates a polarization-diversity coherent receiver 700 according to an embodiment of the present disclosure. The polarization-diversity coherent receiver 700 of FIG. 6 comprises an optical front end 230 and a signal-processing unit 330. The signal processing unit 330 is the same as signal processing unit 300 of FIG. 3A, thus only the left side of unit 330 is shown in FIG. 6.

For the embodiment illustrated in FIG. 6, the quadrature, the quadrature signals ${I}_{XY}$ and ${Q}_{XY}$ are recovered from only two of the three photodetected currents *i*₁, *i*₂, *i*₃ in FIG. 3A. In this case, the transformation matrix for IQ recovery in equation (4) translates into: $\left(\begin{matrix}{I}_{XY} \\ {Q}_{XY}\end{matrix}\right) = \left(\begin{matrix}1 & 1 \\ \frac{1}{\sqrt{3}} & - \frac{1}{\sqrt{3}}\end{matrix}\right) \left(\begin{matrix}{I}_{a} \\ {I}_{b}\end{matrix}\right)$ where *Iₐ* and *I_{b}* can be any pair of the three photodetected currents. In this implementation, the complexity of elements of the optical front-end side is clearly lower. On the other hand, the direct-detection terms and the common-mode noise remain for one of the two signals, i.e. the ${I}_{XY}$ signal, and therefore, it might lead to an increase in the total noise of the system. Here, the direct detection terms should be understood as referring to the detected power from each individual laser, i.e. the transmitter, TX, laser and the laser for the *LO.* The photodetectors retrieve the individual power and the coherent mixing power. The individual ones, i.e. the non-coherent terms are undesired. This provides a setup that is much simpler than the previous embodiments. The tolerance on possible extra noise depends on the final application. For example, in QKD, it might be more critical whereas in telecom network applications it might not matter much, depending on the network scenario.

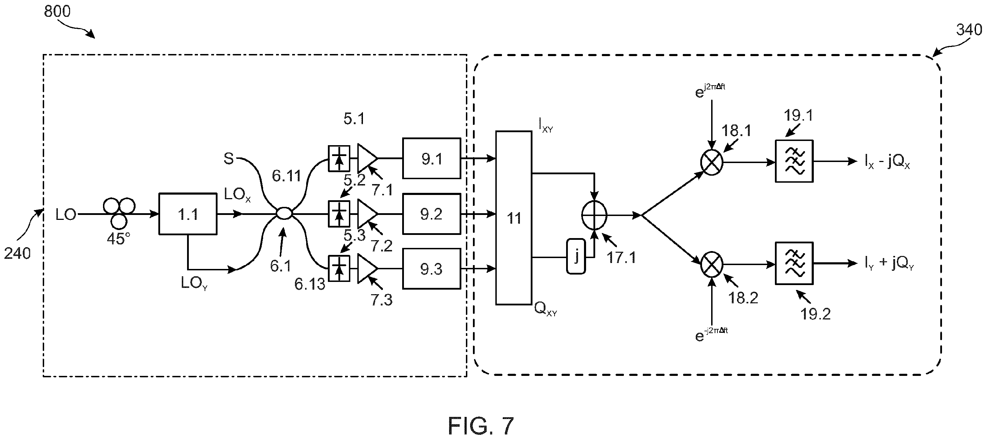

FIG. 7 illustrates a further embodiment of the present disclosure. FIG. 7 illustrates a polarization-diversity coherent receiver 800 according to an embodiment of the present disclosure. The polarization-diversity coherent receiver 800 of FIG. 7 comprises an optical front end 240 and a signal-processing unit 340. It should be noted that the optical front end 240 is the same as the optical front-end 200 illustrated in FIG. 3A.

FIG. 7 illustrates that the software-defined polarization diversity subsystem 340, i.e., the signal processing required to separate the orthogonal SOP components of the received signal, implemented in FIG. 3A with a pair of Hilbert transforms, can also be carried out differently. Here, the embodiment of FIG. 7 illustrates that the signal processing required to separate the orthogonal SOP components of the received signal is achieved by a filtering method in FIG. 7. This method is derived from the demodulation of single-side band (SSB) signals used in radio, as shown in FIG. 7.

Thus, FIG. 7 illustrates that the ${I}_{XY}$ and ${Q}_{XY}$ signals from the IQ recovery module 11 are combined into a complex signal by an adder 17.1. The complex signal is then split into two equal signals and are then frequency down-converted using a pair of complex radio frequency, RF, mixers 18.1 and 18.2, followed by low-pass filters, LPF, 19.1 and 19.2, respectively. Thereby, each of the complex signals ${I}_{X} - {jQ}_{X}$, and ${I}_{Y} + {jQ}_{Y}$ is obtained by filtering out the side-bands of the spectrum of ${I}_{XY} + {jQ}_{XY}$, as shown in FIG.3B, which gives full recovery of the orthogonal polarization components of the received signal. Thus, the spectral configuration shown in FIG. 3B is also valid for the embodiment of FIG. 7.

Finally, it should be noted that no previously discussed embodiments are intended as limitations but serve as examples illustrating features and advantages of the invention. It is to be understood that some or all of the above-described features can also be combined in different ways.

Since the heterodyne detection requires extra BW in the electro-optic components of the RX when compared with homodyne detection, the generation of optical SSB signals at the transmitter side might alleviate this drawback by lowering the total electrical BW requirement of the RX.

### References

[Erk18] M. S. Erkiling et al., "Comparison of Low Complexity Coherent Receivers for UDWDM-PONs ( λ-to-the-User)," in Journal of Lightwave Technology, vol. 36, no. 16, pp. 3453-3464, 15 Aug.15, 2018, doi: 10.1109/JLT.2018.2835376.
[Kov23] I. B. Kovacs, M. S. Faruk and S. J. Savory, "Simplified coherent receivers for passive optical networks," 49th European Conference on Optical Communications (ECOC 2023), Hybrid Conference, Glasgow, UK, 2023, pp. 1182-1185, doi: 10.1049/icp.2023.2490.
[Don14] P. Dong, C. Xie, and L. Buhl, "Monolithic polarization diversity coherent receiver based on 120-degree optical hybrids on silicon," Opt. Express 22, 2119-2125 (2014).

### List of reference signs

1.1, 1.2 polarization beam splitter
3.1, 3.2 optical 90° hybrid
4.1, 4.2, ... 4.8 output of optical 90° hybrid
5.1, 5.2, ... 5.8 photodiodes
7.1, 7.2, ... 7.4 amplifiers
9.1, 9.2, ... 9.4 analog to digital converters (ADC)
100 polarization-diversity intradyne receiver
S received signal
*LO* local oscillator
${S}_{X}$ and ${S}_{Y}$ orthogonal polarization components of received signal
${LO}_{X} , {LO}_{Y}$ orthogonal polarization components of LO
${I}_{X} , {I}_{Y} , {Q}_{X} , {Q}_{Y}$ quadrature signals for each state of polarization
6.1 three by three (3x3) coupler
6.11, 6.12, 6.13 output of 3x3 coupler
8.1 two by two (2x2) coupler
8.11, 8.21 output of 2x2 coupler
10 50:50 beam splitter
110 polarization-diversity heterodyne receiver
200 heterodyne receiver / optical front end
300 (software-defined) polarization diversity module / signal processing unit
11 IQ recovery module
13.1, 13.2 90° Hilbert module
15.1, 15.2, 15.3, 15.4 adder module
${I}_{XY} , {Q}_{XY}$ quadrature signals
2.1 90° polarization-axis rotation
210, 220, 230, 240 heterodyne receiver / optical front end
310, 320, 330, 340 (software-defined) polarization diversity module / signal processing unit
*i*₁, i₂, *i*₃ photodetected currents
17.1 adder module
18.1, 18.2 complex mixer module
19.1, 19.2 low-pass filter

## Claims

1. A polarization-diversity coherent receiver, RX, (220, 230, 240, 500, 600, 650, 700, 800) comprising:
an optical front-end (200, 210, 220) configured to receive a modulated optical signal *S*, the optical front-end (200, 210, 220) comprising:
at least two photodetectors (5.1, 5.2, 5.3);
a local oscillator, *LO,* configured to generate a local oscillator, *LO,* light beam;
a first optical component (1.1) configured to split:
the received signal into two orthogonal polarization components, ${S}_{X}$ and ${S}_{Y}$, or
the local oscillator light beam into two orthogonal polarization components ${LO}_{X}$ and LO_{Y};
a second optical component (6.1) being a 3x3 optical coupler (6.1) configured to mix:
the modulated optical signal *S* with ${LO}_{X}$ and ${LO}_{Y}$, or
the *LO* light beam with ${S}_{X}$ and ${S}_{Y}$, thereby providing a mixed signal, and to output the mixed signal to the at least two photodetectors (5.1, 5.2, 5.3);
the least two photodetectors (5.1, 5.2, 5.3) configured to detect the mixed signal and to output a detected signal;
at least two analog to digital converters, ADCs (9.1, 9.2, 9.3) configured to digitize the detected signal received from the at least two photodetectors(5.1, 5.2, 5.3), thereby providing at least two digitized signals;
a signal processing unit (300, 310, 320, 330, 340) configured to receive the digitized signals from the ADCs (9.1, 9.2, 9.3),
wherein the signal processing unit (300, 310, 320, 330, 340) is configured to recover state of polarization, SOP, contributions of the received signal by either using a pair of Hilbert transforms (13.1, 13.2) or else by using a pair of radio frequency, RF, mixers (18.1, 18.2) followed by low-pass filters, LPF (19.1, 19.2).

2. The polarization diversity coherent receiver of claim 1, wherein the first optical component (1.1) being configured to split local oscillator light beam into two orthogonal polarization components, ${LO}_{X}$ and ${LO}_{Y}$, comprises the first optical component being configured to obtain one of the two orthogonal polarization components, ${LO}_{X}$ and ${LO}_{Y}$, by adding 90° polarization rotation to the respective other one of the two orthogonal polarization components.

3. The polarization diversity coherent receiver of claim 1, wherein the first optical component (1.1) is a polarization beam splitter, PBS, being configured to output two orthogonal polarization components.

4. The polarization diversity coherent receiver according to claim 3, wherein the PBS is further configured to add a 90° polarization rotation to one of the two orthogonal polarization components.

5. The polarization-diversity coherent receiver according to claim any one of claims 1 to 4, wherein detection by the at least two photodetectors is heterodyne.

6. The polarization-diversity coherent receiver according to any one of claims 1 to 5, wherein the signal processing unit is or comprises one of a Field Programmable Gate Array, FPGA and an application-specific integrated circuit, ASIC.

7. The polarization-diversity coherent receiver according to any one of claims 1 to 6, wherein the photodiodes are single-ended.

8. The polarization diversity coherent receiver according to any one of claims 1 to 7, wherein the signal processing unit being configured to recover state of polarization, SOP, further comprises linearly combining the output signals of the ADCs in order to recover quadrature components of the detected signal, as well as to cancel direct-detection terms and common-mode noise.

9. A method of recovering orthogonal polarization components of a received transmission signal, the signal received by a polarization-diversity coherent receiver, RX, according to claim 1, the method comprising:
receiving a modulated optical signal S by an optical front-end;
generating, by a local oscillator, *LO,* local oscillator light beam;
splitting, by a first optical component, the received signal into two orthogonal polarization components, ${S}_{X}$ and ${S}_{Y}$, or the local oscillator light beam into two orthogonal polarization components, ${LO}_{X}$ and ${LO}_{Y}$;
mixing, by a second optical component being a 3x3 optical coupler,
the modulated optical signal S with ${LO}_{X}$ and ${LO}_{Y}$, or the *LO* light beam with ${S}_{X}$ and ${S}_{Y}$, thereby providing a mixed signal;
outputting the mixed signal to at least two photodiodes, detecting the mixed signal by the at least two photodiodes, and outputting a detected signal;
digitizing the detected signal received from the at least two photodetectors, thereby providing at least two digitized signals;
recovering state of polarization, SOP, contributions of the received signal by either using a pair of Hilbert transforms or else by using a pair of radio frequency, RF, mixers and low-pass filters, LPF.

10. The method according to claim 9, wherein splitting, by the first optical component, the local oscillator light beam into two orthogonal polarization components, ${LO}_{X}$ and ${LO}_{Y}$, comprises obtaining one of the two orthogonal polarization components, ${LO}_{X}$ and ${LO}_{Y}$, by adding a 90° polarization rotation to the respective other one of the two orthogonal polarization components.

11. The method according to claim 9, wherein the first optical component is a polarization beam splitter, PBS, being configured to output two orthogonal polarization components.

12. The method according to claim 11, wherein the PBS is further configured to add a 90° polarization rotation to one of the two orthogonal polarization components.

13. The method according to any one of claims 9 to 12, wherein detection by the at least two photodetectors is heterodyne.
